Europäisches Patentamt

European Patent Office

Office européen des brevets

(19)

(11) Numéro de publication : **0 083 998**
**B1**

(12) **FASCICULE DE BREVET EUROPÉEN**

(45) Date de publication du fascicule du brevet :
07.05.86

(21) Numéro de dépôt : 83400009.3

(22) Date de dépôt : 04.01.83

(51) Int. Cl.⁴ : **H 04 N 7/16, H 04 L 9/04**

(54) Générateur d'octets chiffrants ou déchiffrants.

(30) Priorité : 11.01.82 FR 8200288

(43) Date de publication de la demande :
20.07.83 Bulletin 83/29

(45) Mention de la délivrance du brevet :
07.05.86 Bulletin 86/19

(84) Etats contractants désignés :
BE DE GB IT NL SE

(56) Documents cités :
EP-A- 0 014 652
EP-A- 0 028 272
DE-B- 2 634 353
FR-A- 2 044 948
US-A- 4 160 120

(73) Titulaire : **Etablissement Public de Diffusion dit
"Télédiffusion de France"
2, rue de la Mabilais B.P. 1266
F-35013 Rennes Cedex (FR)**

**L'Etat Français, représenté par le Ministre des P.T.T.
(Centre National d'Etudes des Télécommunications)
38-40 rue du Général Leclerc
F-92131 Issy-Les-Moulineaux (FR)**

(72) Inventeur : **Guillou, Louis Claude
16, Rue de l'Ise Bourbarré
F-35230 Saint Erblon (FR)**
Inventeur : **Le Bris, Raymond
7, Allée de Lanester
F-35000 Rennes (FR)**
Inventeur : **Le Rest, Ambroise
18, rue de Brest
F-35000 Rennes (FR)**

(74) Mandataire : **Mongrédien, André et al
c/o BREVATOME 25, rue de Ponthieu
F-75008 Paris (FR)**

EP 0 083 998 B1

# 0 083 998

## Description

La présente invention a pour objet un générateur d'octets chiffrants ou déchiffrants apte à être utilisé notamment dans un système de vidéographie.

On rappelle tout d'abord que dans un système de vidéographie tel que le système ANTIOPE, les informations sont codées en numérique sous forme d'octets constitués d'un élément binaire (ou bit) de poids fort $b_8$ qui est un élément d'imparité, de trois bits de poids fort $b_7$, $b_6$, $b_5$ et de quatre bits de poids faible $b_4$ à $b_1$.

Les octets se divisent en octets de commande et en octets de données. Les octets de commande indiquent notamment des en-têtes et des fins de pages ainsi que des en-têtes et des fins de rangées. Les octets de données, insérés entre des octets de commande, correspondent à des caractères contenus dans les rangées.

L'ensemble des codes pouvant être écrits à l'aide de tels octets s'organise selon un tableau à 8 colonnes selon les valeurs de $b_5$, $b_6$, $b_7$ et 16 lignes selon les valeurs de $b_1$, $b_2$, $b_3$, $b_4$. Dans un tel tableau :
— les colonnes 0 et 1, qui correspondent aux octets dont les $6^e$ et $7^e$ éléments binaires sont nuls, contiennent des octets de commande,
— les colonnes 2 et 3 contiennent essentiellement des nombres et des signes de ponctuation,
— les colonnes 4 et 5 contiennent principalement des majuscules,
— les colonnes 6 et 7 contiennent principalement des minuscules.

A titre d'exemple, une page courante d'informations, accessible à l'usager, se présente sous la forme suivante :

1) — elle contient tout d'abord un en-tête de page, qui se compose des codes de commande (ETX) FF RS $NP_1$ $NP_2$ $NP_3$ ; où :
ETX est un code qui termine la page précédente,
FF est un code qui indique une nouvelle page,
RS est un drapeau de page,
$NP_1$, $NP_2$, $NP_3$ sont des codes indiquant un numéro de page qui va de 001 à 999 ;
2) — après l'en-tête de page, figure une rangée « zéro » : US OO $C_1$ $C_2$ $C_3$ ... RC LF, où :
US est un drapeau de rangée,
OO indique le rang zéro,
$C_1$, $C_2$, $C_3$ sont des codes complémentaires RC, LF terminent la rangée ;
3) — après la rangée zéro, viennent des rangées d'information comprenant d'abord un en-tête de rangée qui se compose des codes (RC LF) US $NR_1$ $NR_2$, où :
RC, LF terminent la rangée précédente,
US est un drapeau de rangée,
$NR_1$, $NR_2$ constituent le numéro de rangée qui va de 01 à 24,
viennent ensuite des octets de données $d_1$, $d_2$ ... $d_n$. Ces octets sont insérés entre l'en-tête de rangée courante et soit une fin de la rangée — début d'une autre rangée — soit une fin de page.

Ces octets $d_1$, $d_2$ ... $d_n$ représentent l'information constituant le service diffusé.

La demande de brevet français (FR-A-2 448 824) décrit des moyens pour ne verrouiller que l'information véhiculée dans les rangées visualisables des pages ordinaires du magazine. En d'autres termes, le verrouillage n'affecte pas les codes de commande figurant dans les colonne 0 et 1 du tableau des codes évoqué plus haut et notamment les codes ETX, FF, RS, RC, LF et US. Il n'affecte que les données $d_1$, $d_2$ ...

Par ailleurs, les moyens prévus dans la demande citée plus haut, respectent l'imparité des octets de données.

Ces résultats sont atteints par l'utilisation d'un automate de verrouillage qui comprend un moyen pour former une suite d'octets chiffrants dont les éléments binaires, notés $c_1$ à $c_8$ sont engendrés de la manière suivante :
— $c_1$, $c_2$, $c_3$, $c_4$ et $c_5$ sont prélevés à la sortie d'un générateur de suite pseudo-aléatoire, réinitialisé au début de chaque rangée visualisable par une clé de service K et par les numéros de la page et de la rangée considérées,
— $c_6$ et $c_7$ sont à zéro, et
— $c_8$ est un élément de parité.

Ainsi, la suite chiffrante obtenue est composée d'octets pairs. Ces octets sont notés $C_1$, $C_2$ ... $C_n$ ou, de façon générique $C_j$. Les octets clairs (c'est-à-dire avant verrouillage) constituant une rangée d'information forment une suite notée $d_1$, $d_2$ ... $d_n$ ou de façon générique $d_j$. Ces octets sont impairs. Ils sont verrouillés par les octets chiffrants selon les règles suivantes : à chaque nouvel octet clair de la rangée visualisable, on prélève un octet de la suite chiffrante ;
— si l'octet clair appartient aux colonnes 0 et 1 du tableau des codes ($b_6 = b_7 = 0$) cet octet est transmis tel quel, et l'octet chiffrant n'est pas utilisé,
— si l'octet clair n'appartient pas aux colonnes 0 ou 1, il est combiné avec l'octet chiffrant dans un circuit logique « OU-exclusif » pour constituer un octet verrouillé $D_j = d_j \oplus C_j$, où le signe $\oplus$ représente l'opération logique « OU-exclusif ».

2

Du fait de la parité des octets chiffrants, les octets diffusés sont impairs, tout comme les octets clairs. En outre, l'opération « OU-exclusif » se traduit par la substitution, à l'octet clair, d'un octet verrouillé appartenant au même groupe de colonnes que l'octet clair, à savoir :

— le groupe des colonnes 2 et 3 qui contient essentiellement les nombres et des signes de ponctuation,

— le groupe des colonnes 4 et 5 qui contient principalement des majuscules,

— et le groupe des colonnes 6 et 7 qui contient principalement des minuscules.

Enfin, les octets appartenant aux colonnes 0 et 1 ne sont pas modifiés, en particulier les octets correspondant aux codes ETX, FF, RS, RC, LF et US qui sont transmis tels quels. De plus, du fait de la nullité des $6^e$ et $7^e$ éléments binaires des octets chiffrants, il n'y a pas introduction de nouveaux octets appartenant à ces colonnes.

A la réception, il reste à déverrouiller l'information. Pour ce faire, le récepteur comprend un générateur d'octets déchiffrants qui délivre des octets formés comme suit :

— les 5 éléments binaires de faible poids sont prélevés dans une suite quasi aléatoire obtenue par un générateur réinitialisé à chaque en-tête de rangée par la clé de service K, par le numéro de page et par le numéro de rangée considérés,

— les $6^e$ et $7^e$ éléments binaires sont nuls, et

— le $8^e$ élément binaire est forcé à zéro.

Les règles de déverrouillage sont analogues aux règles de verrouillage : à chaque nouvel octet reçu appartenant à une rangée verrouillée, un nouvel octet déchiffrant est engendré. Deux cas peuvent se présenter :

— si l'octet reçu appartient aux colonnes 0 et 1, il est transmis tel quel aux circuits d'interprétation,

— si l'octet reçu n'appartient pas aux colonnes 0 et 1 (parce que ses $6^e$ et/ou $7^e$ éléments binaires ne sont pas nuls) il est combiné par un circuit OU-exclusif à l'octet déchiffrant avant la poursuite de l'interprétation.

Ces points étant rappelés, la présente invention peut être définie.

Dans la demande citée plus haut ainsi que dans les documents EP-A-28 272 et FR-A-2 044 948, il était fait usage, pour engendrer la suite pseudo-aléatoire, de polynômes générateurs combinés par une logique non linéaire. Il était fait appel à un ensemble de bascules et de portes OU-exclusif. Un tel générateur fournit bien des octets chiffrants ou déchiffrants adaptés au message à chiffrer ou à déchiffrer. Mais il possède des performances médiocres quand il est implanté en logiciel dans le microprocesseur du décodeur. A titre indicatif, dans un décodeur de type ANTIOPE muni d'un microprocesseur courant, il faut environ 6 secondes pour déchiffrer et interpréter une page contenant 1 kilo-octet.

La présente invention a justement pour objet un générateur d'octets chiffrants ou déchiffrants qui remédie à cet inconvénient, en ce qu'il permet de ramener la durée précédente de 6 à 0,4 secondes pour une complexité tout à fait équivalente. Le nombre d'instructions à dérouler pour engendrer un octet chiffrant ou déchiffrant est donc bien moindre dans le cas de la présente invention.

Un autre avantage procuré par l'invention est un gain important sur la période de la suite pseudo-aléatoire engendrée. Avec le générateur décrit dans la demande de brevet citée la période de la suite était de :

$$(2^{17}—1) \cdot (2^{19}—1) \cdot (2^{31}—1) \text{ soit environ } 1,4 \cdot 10^{17} \text{ octets.}$$

Avec le générateur objet de la présente invention, la période de la suite est le plus petit commun multiple de :

$$(31^7—1), (127^7—1), (31^5—1) \text{ soit environ } 2,3 \cdot 10^{30} \text{ octets.}$$

Ces résultats sont obtenus, grâce à l'invention, par l'utilisation de trois sous-ensembles comprenant chacun des registres fonctionnant en parallèle (sur 5 ou 7 bits), un additionneur également parallèle introduisant une permutation circulaire dans les bits, et des portes OU-exclusif à l'entrée des sous-ensembles pour recevoir des octets d'initialisation. Le générateur travaille ainsi en parallèle entre les 8 bits d'entrée constituant les octets d'initialisation et les 8 bits de sortie constituant les octets chiffrants ou déchiffrants.

Les caractéristiques de l'invention apparaîtront mieux après la description qui suit, qui se réfère à des dessins annexés, sur lesquels :

la figure 1   représente un système de vidéographie muni de moyens de contrôle d'accès et illustre la place occupée par le générateur de l'invention,

la figure 2   représente le générateur de l'invention,

la figure 3   est un diagramme des temps montrant quelques signaux intervenant dans le circuit de la figure précédente.

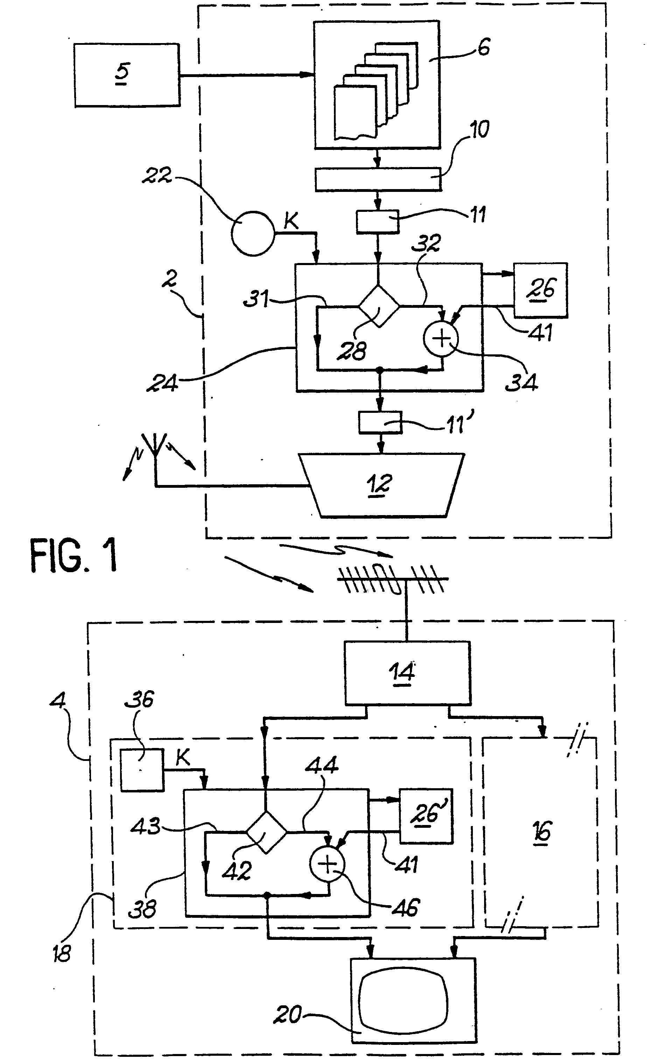

Le système représenté sur la figure 1 comprend :

— une source d'information 5,

— un centre d'émission 2 comprenant :

un moyen 6 d'élaboration d'un magazine constitué de pages organisées en rangées de caractères, si ce moyen n'est pas déjà dans la source d'information 5,

un circuit 10 de mémorisation du magazine sous forme de signaux numériques,

une pluralité de jonctions 11 reliées au circuit 10,

un multiplexeur 12 de diffusion servant à l'insertion des informations dans les lignes d'un signal de télévision.

— des postes récepteurs 4 comprenant :

un circuit 14 de réception et de démodulation dudit signal de télévision,

une voie 16 de traitement des signaux vidéo d'image,

une voie 18 de traitement des signaux numériques contenant notamment un décodeur de signaux numériques, et

un organe de visualisation 20.

Le système représenté comprend en outre dans le centre d'émission 2 :

a) un générateur 22 délivrant un signal numérique représentant une clé de service K, cette clé pouvant changer de manière aléatoire à des intervalles déterminés qui sont par exemple, de l'ordre de quelques minutes,

b) un automate de verrouillage 24 comprenant :

i) un circuit 28 à une entrée reliée au circuit 10 de mémorisation du magazine d'où il reçoit des octets clairs ; ce circuit est apte à distinguer, parmi ces octets clairs, ceux dont les $7^e$ et $6^e$ éléments binaires sont nuls ; ce circuit possède deux sorties 31 et 32, la première véhiculant ces octets à $7^e$ et $6^e$ éléments binaires nuls et qui est reliée au multiplexeur 12 de diffusion (à travers une jonction 11'), et la seconde véhiculant les octets clairs $d_j$ dont les $7^e$ et/ou $6^e$ éléments binaires ne sont pas nuls ;

ii) un circuit logique 34 de type OU-exclusif à deux entrées, l'une reliée à la deuxième sortie 32 du comparateur 28 d'où elle reçoit les octets clairs $d_j$ à $6^e$ et $7^e$ éléments binaires non nuls ; ce circuit logique possède une sortie qui véhicule des octets chiffrés impairs $D_j$, les octets chiffrés étant dirigés ensuite (à travers la jonction 11') vers le multiplexeur de diffusion 12 ;

c) un générateur 26 d'octets chiffrants $C_j$, commandé par l'automate 24 d'où il reçoit des octets indiquant les numéros de page et les numéros de rangées des données à transmettre et le signal correspondant à la clé de service K ; ce générateur d'octets 26 délivre, pour chaque octet de donnée $d_j$ d'une rangée visualisable, un octet chiffrant $C_j$, cet octet possédant un $8^e$ élément binaire de parité et des $7^e$ et $6^e$ éléments binaires nuls, cet octet étant appliqué à la seconde entrée de la porte 34.

Par ailleurs, dans chaque poste récepteur 4, on trouve :

d) un circuit 36 délivrant un signal numérique représentant la clé de service K en cours dans le poste d'émission,

e) un automate de déverrouillage 38 comprenant :

i) un circuit 42 à une entrée recevant les octets chiffrés ; ce circuit est apte à distinguer, parmi ces octets chiffrés, ceux dont les $7^e$ et $6^e$ éléments binaires sont nuls ; ce circuit possède deux sorties 43 et 44, la première véhiculant ces octets dont les $7^e$ et $6^e$ éléments binaires sont nuls, cette première sortie étant reliée à l'organe de visualisation 20, la seconde véhiculant les octets chiffrés $D_j$ dont les $7^e$ et/ou $6^e$ éléments binaires ne sont pas nuls,

ii) un circuit logique 46 de type OU-exclusif à deux entrées, l'une reliée à la sortie 44 du circuit 42 d'où elle reçoit les octets chiffrés $D_j$, ce circuit logique ayant une sortie qui véhicule des octets déchiffrés $d_j$, qui ensuite sont dirigés vers l'organe de visualisation 20.

f) un générateur 26' d'octets déchiffrants, commandé par l'automate de déverrouillage, d'où il reçoit les octets indiquant les numéros de page, les numéros de rangées des données transmises, et, le signal correspondant à la clé de service en cours K ; ce générateur d'octets déchiffrants possède une sortie 41 qui délivre, pour chaque octet chiffré reçu, un octet déchiffrant $C_j$ possédant un élément binaire de poids fort qui est forcé à zéro et des $7^e$ et $6^e$ éléments binaires nuls, ces octets étant appliqués à la seconde entrée de la porte 46.

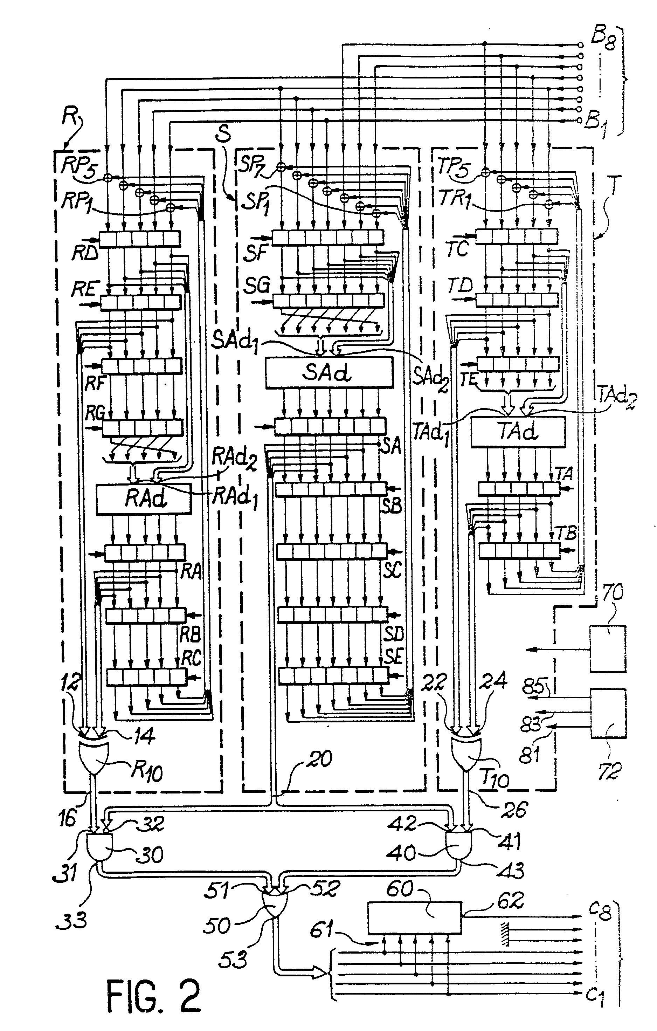

L'invention porte plus particulièrement sur les générateurs d'octets chiffrants 26 et déchiffrants 26'. La structure d'un tel générateur est représentée sur la figure 2.

Tel que représenté le circuit comprend 8 accès d'entrées, respectivement $B_8$, $B_7$ ... $B_1$ poids fort en tête et trois sous-ensembles R, S et T.

Le premier sous-ensemble R est constitué de 5 portes logiques de type OU-exclusif $RP_5$ ... $RP_1$ à deux entrées et une sortie, 7 registres RA, RB, RC, RD, RE, RF, RG et d'un additionneur modulo 31 RAd. Les registres et l'additionneur sont à 5 bits et ont des entrées-sorties parallèles. L'additionneur possède deux groupes d'entrées $RAd_1$ et $RAd_2$.

Les connexions entre ces différents éléments sont les suivantes : les portes $RP_5$, ... $RP_1$ ont une entrée reliée aux 5 accès de poids faibles $B_5$ ... $B_1$ ; le premier registre RD a ses entrées reliées aux sorties des 5 portes précédentes et ses sorties reliées, d'une part, aux entrées du registre RE et, d'autre part, aux entrées du groupe $RAd_2$ de l'additionneur ; les sorties du registre RE sont reliées aux entrées du registre RF, dont les sorties sont reliées aux entrées du registre RG ; les sorties de ce registre après décalage circulaire d'un rang vers les poids forts, sont reliées aux entrées $RAd_1$ de l'additionneur ; ce dernier a ses sorties reliées aux entrées du registre RA dont les sorties sont reliées aux entrées du registre RB ; les sorties de ce dernier sont reliées aux entrées du registre RC et les sorties de ce registre sont rebouclées sur les secondes entrées des portes $RP_5$ ... $RP_1$.

Ce premier sous-ensemble R comporte encore un circuit logique $R_{10}$, de type OU-exclusif, à 5 bits ; ce circuit possède un premier groupe d'entrées 12, qui sont reliées aux sorties du registre RE et un second groupe d'entrées 14, qui sont reliées aux sorties du registre RA ; ce circuit comporte une sortie à 5 bits qui constitue la sortie 16 du premier sous-ensemble R.

Le circuit représenté comprend un second sous-ensemble S constitué de 7 portes logiques de type OU-exclusif SA, SB, SC, SD, SE, SF, SG et d'un additionneur SAd modulo 127. Les registres et l'additionneur sont à 7 bits et possèdent des entrées-sorties parallèles. L'additionneur possède deux groupes d'entrées $SAd_1$ et $SAd_2$.

Les connexions entre tous ces éléments sont les suivantes : les quatre portes $SP_7$, $SP_6$, $SP_5$, $SP_4$ ont une entrée reliée aux 4 accès de poids faible $B_4$, $B_3$, $B_2$, $B_1$ et les trois autres portes $SP_3$, $SP_2$, $SP_1$ ont une entrée reliée aux accès de poids fort $B_7$, $B_6$, $B_5$. Le premier registre SF a ses entrées reliées aux sorties de portes précédentes et ses entrées de poids fort aux accès $B_1$, $B_2$, $B_3$, $B_4$ ; les sorties du registre SF sont reliées, d'une part, aux entrées de registre SG et, d'autre part, aux entrées $SAd_2$ de l'additionneur ; le registre SG a ses sorties reliées, après décalage circulaire d'un rang vers les poids forts, aux entrées $SAd_1$ de l'additionneur ; les sorties de l'additionneur sont reliées aux entrées du registre SB lequel est relié ensuite aux registres SC, SD et SF en série ; les sorties du registre SE sont rebouclées sur les secondes entrées des portes $SP_7$ ... $SP_1$. Ce second sous-ensemble S possède une sortie 20 à 5 bits qui sont les 5 bits de poids faible du registre SA.

Le circuit comprend encore un troisième sous-ensemble T constitué de 5 portes logiques de type OU-exclusif $TP_5$ ... $TP_1$ à deux entrées et une sortie, de 5 registres TA, TB, TC, TD, TE et d'un additionneur TAd modulo 31. Les registres et l'additionneur sont à 5 bits et possèdent des entrées-sorties parallèles. L'additionneur possède deux groupes d'entrées $TAd_1$ et $TAd_2$.

Les connexions entre ces éléments sont les suivantes : les portes $TP_5$ à $TP_1$ ont une entrée reliée aux 5 accès de poids forts $B_8$, $B_7$, $B_6$, $B_5$, $B_4$ ; les entrées du premier registre TC sont reliées aux sorties des portes précédentes ; les sorties de ce même registre sont reliées, d'une part, aux entrées du registre TD et, d'autre part, aux entrées $TAd_2$ de l'additionneur ; les sorties du registre TD sont reliées aux entrées du registre TE ; les sorties de ce registre sont reliées aux entrées de l'additionneur $TAd_2$ ; les sorties de ce dernier sont reliées aux entrées du registre TA ; les sorties de ce registre sont reliées aux entrées du registre TB dont les sorties sont rebouclées sur les secondes entrées des portes $TP_5$ ... $TP_1$.

Ce troisième sous-ensemble T comporte également un circuit logique de type OU-exclusif $T_{10}$, à 5 bits, comprenant un premier groupe d'entrées 22 reliées aux sorties du registre TD et un deuxième groupe d'entrées 24 reliées aux sorties du registre TA ; ce circuit logique possède une sortie à 5 bits qui constitue la sortie 26 du troisième sous-ensemble T.

Le circuit représenté comporte encore un premier circuit logique 30 de type ET à 5 bits, possédant deux entrées 31, 32 et une sortie 33. L'une des entrées 31 est reliée à la sortie 16 du premier sous-ensemble R et l'autre 32, de type inversé, est reliée à la sortie 20 du second sous-ensemble S.

Le circuit comprend encore un second circuit logique 40 de type ET à 5 bits, possédant deux entrées 41 et 42 et une sortie 43. L'une des entrées 41 est reliée à la sortie 26 du troisième sous-ensemble T et l'autre, 42, à la sortie 20 du second sous-ensemble S.

Le circuit comprend encore un circuit logique 50 de type OU à 5 bits possédant deux entrées 51 et 52 et une sortie 53. L'une des entrées 51 est reliée à la sortie 33 du premier circuit logique OU-exclusif ($R_{10}$) et l'autre 52, à la sortie 43 du second circuit logique OU-exclusif ($T_{10}$).

Le circuit comprend encore un additionneur 60 modulo 2 à une entrée 61 à 5 bits reliée à la sortie 53 du circuit logique 50 et une sortie 62 à 1 bit.

Finalement, le circuit possède 8 accès de sortie, respectivement $c_8$, $c_7$ ... $c_1$, poids fort en tête ; l'accès $c_8$ est relié à la sortie 62 de l'additionneur 60 ; les accès $c_6$ et $c_7$ sont en permanence maintenus à un état logique 0 ; les 5 accès $c_5$, $c_4$ ... $c_1$ sont reliés à la sortie 53 à 5 bits du circuit logique 50.

Le circuit se complète par une horloge 70, qui commande un circuit 72 apte à émettre sur une connexion 81 un ordre de lecture pour les registres, sur une connexion 83 un ordre de remise à zéro et sur une connexion 85 un ordre d'écriture. Ces trois connexions sont dirigées sur chacun des registres, ce qui est symbolisé, sur la figure 2, par une unique flèche horizontale au droit de chaque registre.

Le fonctionnement de ce circuit est le suivant :

Sur les accès $B_8$, $B_7$ ... $B_1$ sont appliqués des octets d'initialisation, dont on verra la structure plus loin. Ces octets permettent la mise dans un état initial du générateur. Les branchements particuliers des premiers registres RD, SF et TC à certains des accès $B_8$ ... $B_1$ (à travers les portes logiques) définissent trois nombres d'initialisation, respectivement RI, SI et TI, utilisés par les trois sous-ensembles R, S et T. Si l'on désigne par $b_i$ le bit appliqué sur l'entrée $B_i$, on a respectivement :

$$RI = b_5\ b_4\ b_3\ b_2\ b_1 \text{ soit } 0 \leqslant RI \leqslant 31$$
$$SI = b_4\ b_3\ b_2\ b_1\ b_8\ b_7\ b_6 \text{ soit } 0 \leqslant SI \leqslant 127$$
$$TI = b_8\ b_7\ b_6\ b_5\ b_4 \text{ soit } 0 \leqslant TI \leqslant 31$$

L'état du générateur est caractérisé à chaque instant, par la combinaison des états des trois sous-ensembles R, S et T. Chaque état d'un sous-ensemble dépend des états antérieurs dudit sous-ensemble. Compte tenu des connexions indiquées plus haut, on a :

$$r_{i+1} = r_{i-3} + 2 \cdot r_{i-6} \text{ modulo } 31$$
$$s_{i+1} = s_{i-5} + 2 \cdot s_{i-6} \text{ modulo } 127$$
$$t_{i+1} = t_{i-2} + t_{i-4} \text{ modulo } 31$$

si r, s et t désignent un état des sous-ensembles R, S et T et si l'indice présente un rang qui est fonction d'un entier i. Par exemple le 8e état de R, soit $r_8$ est égal à $r_4 + 2r_2$. L'état global du générateur est défini, à tout instant n, par un ensemble $x_n$ de mots qui sont les contenus des registres. Ce qui peut se noter :

$$x_n = \begin{cases} RA ; RB , RC ; RD ; RE ; RF ; RG \\ SA ; SB ; SC ; SD ; SE ; SF ; SG \\ TA ; TB ; TC ; TD ; TE \end{cases}$$

où RA, RB ... désignent le contenu des registres de même notation.

Cet état comprend 109 éléments binaires répartis en :

7 mots de 5 bits pour la suite r, (registres RA à RG)

7 mots de 7 bits pour la suite s, (registres SA à SG)

5 mots de 5 bits pour la suite t, (registres TA à TE).

A l'instant n + 1, le nouvel état $x_{n+1}$ du générateur est :

$$x_{n+1} = \begin{cases} RD + 2 \cdot RG \text{ mod } 31^* ; RA ; RB ; RC \oplus RI ; RD ; RE ; RF \\ SF + 2 \cdot SG \text{ mod } 127^* ; SA ; SB ; SC ; SD ; SE \oplus SI ; SF \\ TC + TE \text{ mod } 31^* ; TA ; TB \oplus TI ; TC ; TD \end{cases}$$

L'opération $\oplus$ représente le « OU-exclusif », addition bit à bit modulo 2. Les notations mod $31^*$ et mod $127^*$ signifient qu'à l'issue de l'addition on retranche 31 ou 127 tant que le résultat est strictement supérieur à 31 ou 127.

Les octets d'initialisation n'apparaissent sur les entrées $B_8$ à $B_1$ que pendant la phase d'initialisation. Ensuite, ces entrées sont maintenues à zéro tant que le générateur délivre des octets chiffrants ou déchiffrants.

La définition de l'octet de sortie s'effectue à partir de l'état $x_n$ par l'ensemble des circuits $R_{10}$, $T_{10}$, 30, 40, 50. De façon plus précise, chacun des 5 bits de poids faible de SA, suivant sa valeur à 0 ou à 1, commande le choix entre le bit correspondant de RA$\oplus$RE ou le bit correspondant de TA$\oplus$TD.

Si les bits de RA$\oplus$RE, SA et TA$\oplus$TD s'écrivent respectivement, du poids fort au poids faible :

$r_5$ $r_4$ $r_3$ $r_2$ $r_1$ ; $s_7$ $s_6$ $s_5$ $s_4$ $s_3$ $s_2$ $s_1$ ; $t_5$ $t_4$ $t_3$ $t_2$ $t_1$ alors l'octet chiffrant s'écrit bit à bit :

$$C_1 = r_1 \cdot s_1 + s_1 \cdot t_1 \text{ modulo } 2$$

$$C_5 = r_5 \cdot s_5 + s_5 \cdot t_5 \text{ modulo } 2$$
$$C_6 = 0$$
$$C_7 = 0$$
$$C_8 = C_1 + ... + C_5 \text{ modulo } 2$$

On remarquera que, pour les octets déchiffrants, quand le bit d'imparité a déjà été remplacé par une indication de bonne parité, les trois bits de poids fort sont à zéro.

Comme indiqué dans le brevet européen 14652, l'initialisation du générateur d'octets chiffrants ou déchiffrants peut s'effectuer à l'aide de la clé de service K (qui est constituée de 64 éléments binaires, soit 8 octets notés $k_1$ à $k_8$), du numéro de rangée (qui varie de 1 à 24 et qui est codé sur deux octets notés $NR_1$ et $NR_2$), et du numéro de page (qui varie de 001 à 999 et qui est codé sur trois octets notés $NP_1$, $NP_2$ et $NP_3$). Cette initialisation du générateur est pratiquée au début de chaque rangée d'information, à l'aide de 8 octets particuliers, obtenus à partir des 8 octets qui définissent la clé du service et des cinq octets définissant le numéro de page et le numéro de rangée.

Les deux octets $NR_1$ et $NR_2$ codant un numéro de rangée s'écrivent respectivement x8 x7 x6 x5 x4 x3 x2 x1 et y8 y7 y6 y5 y4 y3 y2 y1 du poids fort au poids faible. On utilise, pour constituer les octets d'initialisation, des octets H(y4 y3 y2 y1), H(y8 y7 y6 y5), H(x4 x3 x2 x1) et H(x8 x7 x6 x5) obtenus par codage de Hamming de la manière connue suivante : si l'on désigne les différents bits d'un tel octet H par g8 g7 ... gl, on a :

$$g7 = g8 \oplus g6 \odot g4$$
$$g5 = g6 \oplus g4 \oplus g2$$
$$g3 = g4 \text{ L } g2 \oplus g8$$
$$g1 = g2 \oplus g8 \oplus g6$$

La correspondance est représentée dans le tableau I suivant où la première colonne donne la valeur du nombre en notation hexadécimale et les 8 colonnes suivantes les valeurs des différents bits.

Les colonnes g8, g6, g4, g2 correspondent aux bits d'information et les colonnes g7, g5, g3, gl aux bits de redondance.

Tableau I

| Notation hexadécimale | g8 | g7 | g6 | g5 | g4 | g3 | g2 | gl |
|---|---|---|---|---|---|---|---|---|
| 0 | 0 | 0 | 0 | 1 | 0 | 1 | 0 | 1 |
| 1 | 0 | 0 | 0 | 0 | 0 | 0 | 1 | 0 |
| 2 | 0 | 1 | 0 | 0 | 1 | 0 | 0 | 1 |
| 3 | 0 | 1 | 0 | 1 | 1 | 1 | 1 | 0 |
| 4 | 0 | 1 | 1 | 0 | 0 | 1 | 0 | 0 |
| 5 | 0 | 1 | 1 | 1 | 0 | 0 | 1 | 1 |
| 6 | 0 | 0 | 1 | 1 | 1 | 0 | 0 | 0 |
| 7 | 0 | 0 | 1 | 0 | 1 | 1 | 1 | 1 |
| 8 | 1 | 1 | 0 | 1 | 0 | 0 | 0 | 0 |
| 9 | 1 | 1 | 0 | 0 | 0 | 1 | 1 | 1 |
| A | 1 | 0 | 0 | 0 | 1 | 1 | 0 | 0 |
| B | 1 | 0 | 0 | 1 | 1 | 0 | 1 | 1 |
| C | 1 | 0 | 1 | 0 | 0 | 0 | 0 | 1 |
| D | 1 | 0 | 1 | 1 | 0 | 1 | 1 | 0 |
| E | 1 | 1 | 1 | 1 | 1 | 1 | 0 | 1 |
| F | 1 | 1 | 1 | 0 | 1 | 0 | 1 | 0 |

Ainsi le chiffre 4, qui, en binaire normal, s'écrit 0100, s'écrit dans le codage de Hamming, H(0100) = (01100100).

Dans ces conditions, les huits octets IA, ... IH qui sont utilisés pour l'initialisation utilisent ces 4 octets de Hamming traduisant le numéro de rangée, combinés aux 8 octets $k_1$ à $k_8$ définissant la clé. Une combinaison possible est définie par :

$IA = k_1 \oplus H(y4y3y2y1)$
$IB = k_2 \oplus H(y8y7y6y5)$
$IC = k_3 \oplus H(x4x3x2x1)$
$ID = k_4 \oplus H(x8x7x6x5)$
$IE = k_5 \oplus NR_3$
$IF = k_6 \oplus NR_2$
$IG = k_7 \oplus NR_1$
$IH = k_8$

Un exemple fera mieux comprendre le processus d'élaboration de ces octets d'initialisation.

La clé de service K est définie par les 8 octets suivants (notés en hexadécimal, c'est-à-dire selon le code de la colonne 1 du tableau I évoqué plus haut) :

$k_1 = 17$ ; $k_2 = BE$ ; $k_3 = 62$ ; $k_4 = A9$ ; $k_5 = 65$ ; $k_6 = 3C$ ; $k_7 = 84$ ; $k_8 = DO$

On suppose que la rangée à coder est définie par US = 1F ; $NR_1 = 45$ ; $NR_2 = C_1$ et que cette rangée appartient à une page définie par :

SOH = 01 ; RS = 9E ; $NP_1 = 15$ ; $NP_2 = 64$ ; $NP_3 = 73$

Selon la notation des octets rappelée au début, le code 1/5 signifie 0001/0101 soit 0, compte tenu du codage de Hamming rappelé dans le tableau ci-dessus ; 6/4 correspond de même à 4 et 7/3 à 5. La page en question définie par $NP_1 = 15$, $NP_2 = 64$ et $NP_3 = 73$ est donc la page 045.

Les 4 octets définissant la rangée $NR_1$, $NR_2$ à prendre en compte sont alors respectivement $H(NR_{2f})$, $H(NR_{2F})$, $H(NR_{1f})$, $H(NR_{1F})$ si $NR_{2f}$ et $NR_{2F}$ désignent respectivement les 4 bits de poids faible et fort de $NR_2$ et $NR_{1f}$, $NR_{1F}$ les 4 bits de poids faible et fort de $NR_1$. Dans le cas envisagé, les 4 octets $H(1)$, $H(C)$, $H(5)$, $H(4)$ sont respectivement, d'après le tableau des codes de Hamming : (02), (A1), (73) et (64).

Les 8 octets d'initialisation du générateur sont donc :

$$I_1 = k_1 \oplus H(NR_{2f}) = k_1 \oplus H(1) = \text{'17'} \oplus \text{'02'} = \text{'15'}$$
$$I_2 = k_2 \oplus H(NR_{2F}) = k_2 \oplus H(C) = \text{'BE'} \oplus \text{'A1'} = \text{'1F'}$$
$$I_3 = k_3 \oplus H(NR_{1f}) = k_3 \oplus H(5) = \text{'62'} \oplus \text{'73'} = \text{'11'}$$
$$I_4 = k_4 \oplus H(NR_{1F}) = k_4 \oplus H(4) = \text{'A9'} \oplus \text{'64'} = \text{'CD'}$$
$$I_5 = k_5 \oplus C3 = k_5 \oplus H(5) = \text{'65'} \oplus \text{'73'} = \text{'16'}$$
$$I_6 = k_6 \oplus C2 = k_6 \oplus H(4) = \text{'3C'} \oplus \text{'64'} = \text{'58'}$$
$$I_7 = k_7 \oplus C1 = k_7 \oplus H(0) = \text{'84'} \oplus \text{'15'} = \text{'91'}$$
$$I_8 = k_8 = k_8 = \text{'DO'} = \text{'DO'}$$

Ces huit octets d'initialisation permettent de constituer huit triplets RI, SI et TI par le choix de certains des bits qui les composent, ce choix étant dicté par les connexions particulières des entrées des 3 sous-ensembles R, S, T aux accès ; ces triplets sont utilisés pour l'initialisation des 3 sous-ensembles R, S et T. Le tableau suivant donne les valeurs des mots RI, SI et TI en binaire et en décimal. On rappelle que si l'octet I s'écrit b8b7b6b5b4b3b2b1, alors RI s'écrit b5b4b3b2b1, SI s'écrit b4b3b2b1b8b7b6 et TI s'écrit b8b7b6b5b4.

Tableau II

|  | I | RI | SI | TI |
|---|---|---|---|---|
| $I_1$ | '15'=0001 0101 | 10101=21 | 0101 000=40 | 00010=2 |
| $I_2$ | '1F'=0001 1111 | 11111=31 | 1111 000=120 | 00011=3 |
| $I_3$ | '11'=0001 0001 | 10001=17 | 0001 000=8 | 00010=2 |
| $I_4$ | 'CD'=1100 1101 | 01101=13 | 1101 110=110 | 11001=25 |
| $I_5$ | '16'=0001 0110 | 10110=22 | 0110 000=48 | 00010=2 |
| $I_6$ | '58'=0101 1000 | 11000=24 | 1000 010=66 | 01011=11 |
| $I_7$ | '91'=1001 0001 | 10001=17 | 0001 100=12 | 10010=18 |
| $I_8$ | 'DO'=1101 0000 | 10000=16 | 0000 110=6 | 11010=26 |

Au début de la rangée considérée, le générateur prend en compte successivement les octets d'initialisation. Cela signifie que chaque sous-ensemble prend en compte successivement les 8 mots d'initialisation RI, SI ou TI qui le concernent. Les premiers registres recevant ces mots d'initialisation sont les registres RD, SF et TC. Ces mots se décalent ensuite vers les registres RE, SG et TC alors que les premiers registres RD, SF et TC reçoivent les seconds mots d'initialisation. Le tableau III donne l'évolution des contenus des différents registres, pas à pas, en fonction de l'évolution des mots d'initialisation apparaissant à l'entrée des portes OU-exclusif qui ouvrent chaque sous-ensemble.

Tableau III

| RI | 21 | 31 | 17 | 13 | 22 | 24 | 17 | 16 | — |
|---|---|---|---|---|---|---|---|---|---|
| RG | 0 | 0 | 0 | 0 | 21 | 31 | 17 | 13 | 3 |
| RF | 0 | 0 | 0 | 21 | 31 | 17 | 13 | 3 | 7 |
| RE | 0 | 0 | 21 | 31 | 17 | 13 | 3 | 7 | 0 |
| RD | 0 | 21 | 31 | 17 | 13 | 3 | 7 | 0 | 8 |
| RC | 0 | 0 | 0 | 0 | 21 | 31 | 17 | 24 | 3 |
| RB | 0 | 0 | 0 | 21 | 31 | 17 | 24 | 3 | 10 |
| RA | 0 | 0 | 21 | 31 | 17 | 24 | 3 | 10 | 26 |

(Suite)

| RI | 21 | 31 | 17 | 13 | 22 | 24 | 17 | 16 | – |
|---|---|---|---|---|---|---|---|---|---|
| SI | 40 | 120 | 8 | 110 | 48 | 66 | 12 | 6 | – |
| SG | 0 | 0 | 40 | 120 | 8 | 110 | 48 | 66 | 36 |
| SF | 0 | 40 | 120 | 8 | 110 | 48 | 66 | 36 | 79 |
| SE | 0 | 0 | 0 | 0 | 0 | 0 | 40 | 73 | 121 |
| SD | 0 | 0 | 0 | 0 | 0 | 40 | 73 | 121 | 126 |
| SC | 0 | 0 | 0 | 0 | 40 | 73 | 121 | 126 | 14 |
| SB | 0 | 0 | 0 | 40 | 73 | 121 | 126 | 14 | 35 |
| SA | 0 | 0 | 40 | 73 | 121 | 126 | 14 | 35 | 41 |
| TI | 2 | 3 | 2 | 25 | 2 | 11 | 18 | 26 | – |
| TE | 0 | 0 | 0 | 2 | 3 | 2 | 27 | 1 | 15 |
| TD | 0 | 0 | 2 | 3 | 2 | 27 | 1 | 15 | 12 |
| TC | 0 | 2 | 3 | 2 | 27 | 1 | 15 | 12 | 25 |
| TB | 0 | 0 | 0 | 2 | 3 | 4 | 30 | 3 | 11 |
| TA | 0 | 0 | 2 | 3 | 4 | 30 | 3 | 11 | 13 |

A l'issue de la prise en compte du huitième octet d'initialisation, le générateur est prêt à délivrer le premier octet chiffrant. Le contenu des registres est :

$$RA = 26 \quad RE = 0 \qquad\qquad RA \oplus RE = 26 = 11010$$
$$SA = 41 \qquad\qquad \text{on a} \quad SA = 41 = 01\;01001$$
$$TA = 13 \quad TD = 12 \qquad\qquad TA \oplus TD = 01 = 00001$$

Les 5 bits obtenus en sortie de la porte 50 sont : 1 0 0 1 1. Et le premier octet chiffrant est donc '93' en hexadécimal.

Les états suivants sont obtenus par les récurrences indiquées plus haut :

$$r_{i+1} = r_{i-3} + 2 \cdot R_{i-6} \bmod 31^*$$
$$s_{i+1} = s_{i-5} + 2 \cdot s_{i-5} \bmod 127^*$$
$$t_{i+1} = t_{i-2} + t_{i-4} \qquad \bmod 31^*$$

Les cinq bits de base de l'octet chiffrant sont obtenus par :

$$(r_{i+1} \oplus r_{i-2}) \cdot s_i + s_i \cdot (t_{i+1} \oplus t_{i-1})$$

l'opération $\oplus$ étant le « OU-exclusif », addition bit à bit modulo 2, l'opération « $\cdot$ » étant le « ET-logique » multiplication bit à bit modulo 2.

Les treize premiers octets chiffrants sont : '93', '96', '9A', '82', '1D', '12', '17', '1D', '8B', '87', '1D', '18', '95', ...

De façon générale, en désignant par $d_1$, $d_2$, $d_3$ ... les octets clairs d'une rangée, par $C_1$, $C_2$, $C_3$ les octets chiffrants délivrés par le générateur et par $D_1$, $D_2$, $D_3$ ... les octets chiffrés, on a la suite des codes suivants :

Octets clairs : US $NR_1$ $NR_2$ $\quad d_1$ $d_2$ $d_3$ $d_4$ $d_5$ $d_6$ $d_7$ ...
Octets chiffrants : $\qquad\qquad C_1$ $C_2$ $C_3$ $C_4$ $C_5$ $C_6$ $C_7$ ...
Octets chiffrés : US $NR_1$ $NR_2$ $D_1$ $D_2$ $D_3$ $D_4$ $D_5$ $D_6$ $D_7$ ...

$$\text{avec } D_i = \begin{cases} d_i, \text{ si } d_i \text{ appartient aux colonnes 0 ou 1,} \\ d_i \oplus C_i \text{ si } d_i \text{ appartient aux colonnes 2 à 7.} \end{cases}$$

Ainsi, avec l'exemple précédent d'une rangée commençant par : ... '1F', '45', 'CI' et se poursuivant par : '20', '20', '20', '9B', '4F', '57', '45', 'CI', '54', 'C8', '45', '52', '20', la rangée chiffrée correspondante est : ... '1F', '45', 'CI', 'B3', 'B6', 'BA', '9B', '52', '45', '52', 'DC', 'DF', '4F', '58', '4A', 'B5'.

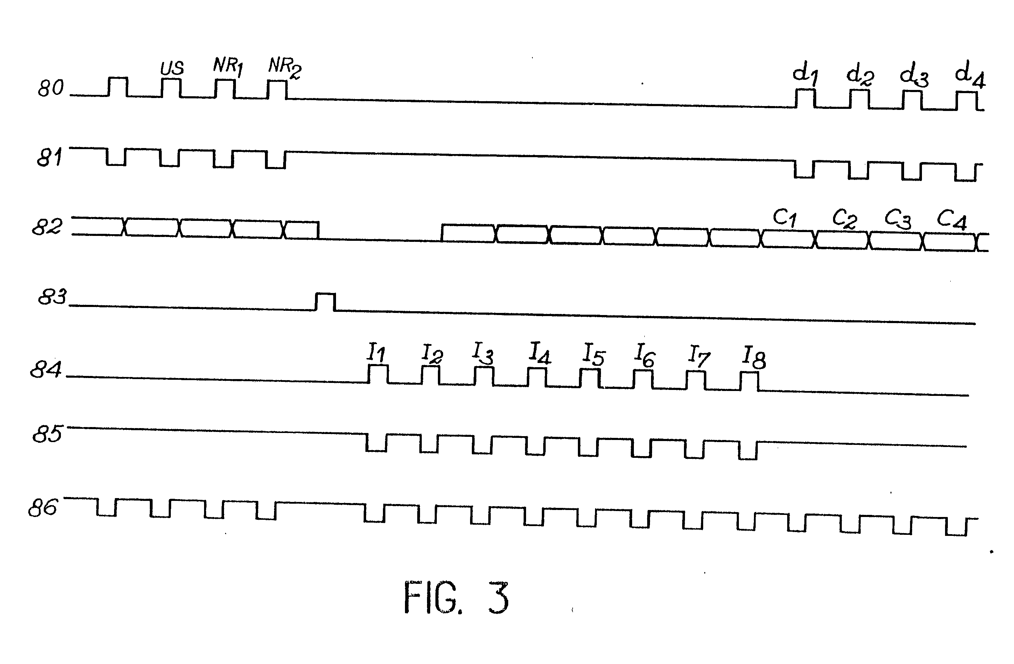

La figure 3 est un diagramme des temps montrant l'évolution de différents signaux intervenant dans le circuit de la figure 2. La ligne 80 représente les signaux en clair (US suivi de $NR_1$ et $NR_2$ suivis des données proprement dites $d_1$, $d_2$, ...) ; la ligne 81 représente le complément du signal de lecture des registres délivré par la sortie 81 du circuit 72 ; la ligne 82 représente la suite chiffrante $C_1$, $C_2$, $C_3$, ...., la ligne 83 représente l'impulsion de remise à zéro du générateur délivré par le circuit 72 ; la ligne 84 représente les instants d'initialisation $I_1$ à $I_8$ ; la ligne 85 représente le complément du signal d'écriture dans les registres des bits d'initialisation ; la ligne 86 donne les impulsions d'horloge émise par 70.

## Revendication

Générateur d'octets chiffrants ou déchiffrants comprenant 8 accès d'entrée ($B_8$, $B_7$ ... $B_1$), et 8 accès de sortie ($c_8$, $c_7$ ... $c_1$) et, entre ces accès d'entrée et ces accès de sortie, trois sous-ensembles (R, S, T) aptes à délivrer chacun des suites d'éléments binaires, le premier et le deuxième de ces sous-ensembles étant reliés à une première porte logique ET(30), le deuxième et le troisième sous-ensembles étant reliés à une deuxième porte logique ET(40), une troisième porte logique de type OU, (50) étant reliée aux sorties des deux portes ET (30, 40), caractérisé en ce que :

1) le premier sous-ensemble R est constitué de 5 portes logiques OU-exclusif ($RP_5$ à $RP_1$) à 2 entrées et une sortie, de 7 registres parallèles (RA, RB, RC, RD, RE, RF, RG) et d'un additionneur parallèle (RAd) modulo 31, tous ces registres et additionneur étant à 5 bits et ayant des entrées-sorties parallèles, l'additionneur ayant 2 groupes d'entrées ($RAd_1$, $RAd_2$) les connexions entre ces registres et l'additionneur étant les suivantes : les portes OU-exclusif ont une entrée reliée aux 5 accès $B_1$ à $B_5$ de poids faible, le premier registre RD a ses entrées reliées aux sorties des portes et ses sorties reliées, d'une part, aux entrées du registre RE et, d'autre part, aux entrées d'un groupe ($RAd_2$) de l'additionneur, les sorties du registre RE sont reliées aux entrées du registre RF, dont les sorties sont reliées aux entrées du registre RG, les sorties de ce registre après décalage circulaire d'un rang vers les poids forts sont reliées aux entrées de l'autre groupe de l'additionneur ($RAd_1$), ce dernier a ses sorties reliées aux entrées du registre RA dont les sorties sont reliées aux entrées du registre RB, les sorties de ce dernier sont reliées aux entrées du registre RC, et les sorties de ce registre sont rebouclées sur les autres entrées des portes OU-exclusif ; ce premier sous-ensemble R comportant encore un circuit logique ($R_{10}$) de type OU-exclusif à 5 bits possédant un premier groupe d'entrée (12) qui sont reliées aux sorties du registre RE et un second groupe d'entrées (14), qui sont reliées aux sorties du registre RA, ce circuit comportant une sortie à 5 bits qui constitue la sortie (16) du premier sous-ensemble ;

2) le second sous-ensemble S est constitué de 7 portes OU-exclusif ($SP_7$ ... $SP_1$) à 2 entrées et une sortie, de 7 registres parallèles (SA, SB, SC, SD, SE, SF, SG) et d'un additionneur parallèle (SAd) modulo 127, tous ces registres et cet additionneur étant à 7 bits et ayant des entrées-sorties parallèles, l'additionneur possédant deux groupes d'entrées ($SAd_1$, $SAd_2$), les connexions entre ces registres et cet additionneur étant les suivantes : les portes OU-exclusif $SP_7$ à $SP_4$ ont une entrée reliée aux accès $B_4$, $B_3$, $B_2$, $B_1$, et les portes $SP_3$ à $SP_1$ aux accès $B_8$, $B_7$, $B_6$ ; le premier registre SF a ses entrées reliées aux sorties des portes précédentes ; les sorties du registre SF sont reliées d'une part aux entrées du registre SG et, d'autre part, aux entrées ($SAd_2$) d'un des groupes de l'additionneur ; le registre SG a ses sorties reliées, après décalage circulaire d'un rang vers les poids forts, aux entrées de l'autre groupe ($SAd_1$) de l'additionneur ; les sorties de l'additionneur sont reliées aux entrées du registre SB relié ensuite aux registres SC, SD et SF en série, les sorties du registre SE étant rebouclées sur les autres entrées des portes $SP_7$ à $SP_1$ ; ce second sous-ensemble S ayant une sortie (20) à 5 bits, qui sont les 5 bits de poids faible du registre SA ;

3) le troisième sous-ensemble T est constitué de 5 portes OU-exclusif ($TP_5$ ... $TP_1$) à 2 entrées et une sortie, de 5 registres parallèles (TA, TB, TC, TD, TE) et d'un additionneur modulo 31 (TAd), tous ces registres et cet additionneur étant à 5 bits et ayant des entrées-sorties parallèles, l'additionneur ayant deux groupes d'entrées ($TAd_1$, $TAd_2$), les connexions entre ces registres et l'additionneur étant les suivantes : les portes OU-exclusif ont une entrée reliée aux accès B8, B7, B6, B5, B4 ; les entrées du premier registre TC sont reliées aux sorties des portes précédentes et les sorties sont reliées d'une part aux entrées du registre TD et, d'autre part, aux entrées ($TAd_2$) d'un des groupes de l'additionneur, les sorties du registre TD sont reliées aux entrées du registre TE, les sorties de ce registre sont reliées aux entrées ($TAd_1$) de l'autre groupe de l'additionneur ; les sorties de ce dernier sont reliées aux entrées du registre TA ; les sorties de ce registre sont reliées aux entrées du registre TB dont les sorties sont rebouclées sur les autres entrées des portes $T_5$, ... $T_1$ ; ce troisième sous-ensemble T comportant également un circuit logique ($T_{10}$) de type OU-exclusif à 5 bits, comprenant un premier groupe d'entrée (22) reliées aux sorties du registre TD et un deuxième groupe d'entrées (24) reliées aux sorties du registre TA, ce circuit logique ayant une sortie à 5 bits qui constitue la sortie (26) du troisième sous-ensemble T,

4) le générateur comprend en outre un additionneur modulo 2 (60) à une entrée (61) à 5 bits reliée à la sortie (53) de la porte logique OU (50), et à une sortie (62) à 1 bit reliée à l'accès de sortie $c_8$,

5) les accès de sortie $c_6$ et $c_7$ sont reliés en permanence à un potentiel correspondant à l'état logique 0.

## Claim

Coding or decoding byte generator comprising input terminals ($B_8$, $B_7$ ... $B_1$), and 8 output terminals

($C_8$, $C_7$, ... $C_1$) and, between said input and said output terminals, three sub-assemblies (R, S, T) each adapted to deliver strings of bits, the first and second of said sub-assemblies being connected to a first AND gate (30), the second and third sub-assemblies being connected to a second AND gate (40), a third gate, being an OR gate (50), being connected to the outputs of the two AND gates (30, 40), characterised in that :

1) The first sub-assembly R comprises 5 OR-exclusive gates ($RP_5$ to $RP_1$) having two inputs and one output, 7 parallel registers (RA, RB, RC, RD, RE, RF, RG) and a parallel adder (RAd) modulo 31, each of said registers and adder being of the 5-bit type and having parallel inputs-outputs, the adder having two groups of inputs ($RAd_1$, $RAd_2$), the connections between said registers and adder being as follows : the OR-exclusive gates have one input terminal connected to the five least significant inputs, $B_1$ to $B_5$, the first register (RD) having its inputs connected to the outputs of the gates, and its outputs connected on the one hand to the inputs of register RE, and on the other hand to the inputs of one group ($RAd_2$) of the adder, the outputs of register RE are connected to the inputs of register RF, whose outputs are connected to the inputs of register RG, the outputs of said register, after circular shift of one rank in the more significant direction, are connected to the inputs of the other group of the adder ($RAd_1$), the latter having its outputs connected to the inputs of register RA, whose outputs are connected to the inputs of register RB, the outputs of said latter being connected to the inputs of register RC, and the outputs of said register are fed back to the other inputs of the OR-exclusive gates ; said first sub-assembly R also comprising a logic circuit ($R_{10}$) of the 5-bit OR-exclusive type having a first group of inputs (12) connected to the register RE, and a second group of inputs (14) connected to the outputs of register RA, said circuit having a 5-bit output which constitutes the output (16) of the first sub-assembly ;

2) The second sub-assembly S comprises 7 OR-exclusive gates ($SP_7$ ... $SP_1$) having 2 inputs and 1 output, 7 parallel registers (SA, SB, SC, SD, SE, SF, SG) and a parallel adder (SAd) modulo 127, all said registers and said adder being of the 7-bit type and having parallel inputs-outputs, the adder having two groups of inputs ($SAd_1$, $SAd_2$), the connections between said registers and said adder being as follows : the OR-exclusive gates $SP_7$ to $SP_4$ have an input connected to the input terminals $B_4$, $B_3$, $B_2$, $B_1$, and the gates $SP_3$ to $SP_1$ are connected to input terminals $B_8$, $B_7$, $B_6$ ; the inputs of the first register SF are connected to the outputs of the preceding gates : the outputs of register SF are connected, on the one hand, to the inputs of register SG and, on the other hand, to inputs ($SAd_2$) of one of the groups of the adder ; the outputs of register SG are connected, after circular shift by one rank in the more significant direction, are connected to inputs of the other group ($SAd_1$) of the adder ; the outputs of the adder are connected to inputs of register SB subsequently connected in series to registers SC, SD and SF, the outputs of register SE being fed back to the other inputs of gates $SP_7$ to $SP_1$ ; said second sub-assembly S having a 5-bit output (20), which are the 5 least significant bits of register SA ;

3) The third sub-assembly T comprises 5 OR-exclusive gates ($TP_5$ ... $TP_1$) with 2 inputs and one output, 5 parallel registers (TA, TB, TC, TD, TE) and an adder (TAd) modulo 31, all said registers and said adder being of the 5-bit type and having parallel inputs-outputs, the adder having two groups of inputs ($TAd_1$, $TAd_2$), the connections between said registers and adder being as follows : the OR-exclusive gates have an input connected to the input terminals $B_8$, $B_7$, $B_6$, $B_5$, $B_4$ ; the inputs for the first register TC are connected to the outputs of the preceding gates and its outputs are connected, on the one hand, to the inputs of register TD and, on the other hand, to the inputs ($TAd_2$) of one of the groups of the adder, the outputs of the register TD are connected to inputs of the register TE, the outputs of said register being connected to the inputs ($TAd_1$) of the other group of the adder ; the outputs of said latter being connected to inputs of register TA ; the outputs of said register being connected to the inputs of register TB whose outputs are fed back to the other inputs of the gates $T_5$ ... $T_1$ ; said third sub-assembly T also comprising a logic circuit ($T_{10}$) of the 5-bit OR-exclusive type, comprising a first group of inputs (22) connected to outputs of the register TD, and a second group of inputs (24) connected to the outputs of register TA, said logic circuit having a 5-bit output which constitutes the output (26) of the third sub-assembly T,

4) The generator additionally comprises an adder (60) modulo 2, having one 5-bit input (61) connected to the output (53) of the OR gate (50), and a 1-bit input (62) connected to the access of the output terminal $C_8$,

5) The output terminals $C_6$ and $C_7$ are permanently maintained at a potential corresponding to logic state 0.

**Patentanspruch**

Verschlüsselungs- oder Entschlüsselungs-Byte-Generator mit acht Eingängen ($B_8$, $B_7$ ... $B_1$) und mit acht Ausgängen ($c_8$, $c_7$ ... $c_1$) sowie mit drei Untereinheiten (R, S, T) zwischen den Eingängen und den Ausgängen, die dazu geeignet sind, jedem Folgen binärer Elemente zu liefern, wobei die erste und die zweite der Untereinheiten an ein erstes logisches UND-Gatter (30) angeschlossen sind, wobie die zweite und dritte Untereinheit an ein zweites logisches UND-Gatter (40) angeschlossen sind und wobei ein drittes logisches Gatter vom ODÉR-Typ (50) an die Ausgänge der beiden UND-Gatter (30, 40) angeschlossen sind, dadurch gekennzeichnet, daß :

1) die erste Untereinheit R aus fünf logischen Exclusiv-ODER-Gattern ($RP_5$ bis $RP_1$) mit zwei

Eingängen und einem Ausgang, aus sieben parallelen Registern (RA, RB, RC, RD, RE, RF, RG) und einem parallelen Addierer vom Typ Modulo 31 (RAd) besteht, wobei die Register und der Addierer 5 Bits haben und parallele Eingänge und Ausgänge aufweisen, wobei der Addierer zwei Gruppen von Eingängen $(RAd_1, RAd_2)$ aufweist, wobei die Verbindungen zwischen den Registern und dem Addierer folgendermaßen ausgebildet sind : die Exclusiv-ODER-Gatter sind mit einem Eingang an fünf Anschlüsse $B_1$ bis $B_5$ von niedriger Wertigkeit angeschlossen, das erste Register RD ist mit seinen Eingängen an die Ausgänge der Gatter angeschlossen und ist mit seinen Ausgängen zum einen Teil an die Eingänge des Registers RE und zum anderen Teil an die Eingänge einer Gruppe $(RAd_2)$ von Addierern angeschlossen, die Ausgänge des Registers RE sind mit den Eingängen des Registers RF verbunden, dessen Ausgänge mit den Eingängen des Registers RG verbunden sind, wobei die Ausgänge dieses Registers in ringförmiger Vertauschung um eine Stelle zur höheren Wertigkeit hin versetzt an die Eingänge der anderen Gruppe von Addierern $(RAd_1)$ angeschlossen ist, wobei der letzte seiner Eingänge an die Eingänge des Registers RA angeschlossen ist, dessen Ausgänge an die Eingänge des letztgenannten an die Eingänge des Registers RC angeschlossen sind und wobei die Ausgänge dieses Registers zurückgeschleift sind zu den anderen Eingängen der Exclusiv-ODER-Gatter ; die erste Untereinheit R enthält weiterhin eine logische Schaltung $(R_{10})$ des Exclusiv-ODER-Typs mit 5 Bits mit einer ersten Gruppe von Eingängen (12), die an die Ausgänge des Registers RE angeschlossen sind und mit einer zweiten Gruppe von Eingängen (14), die an die Ausgänge des Registers RA angeschlossen sind, wobei die Schaltung einen Ausgang von 5 Bits aufweist, der den Ausgang 16 der ersten Untereinheit darstellt ;

2) daß die zweite Untereinheit S aus sieben Exclusiv-ODER-Gattern $(SP_7 ... SP_1)$ mit zwei Eingängen und einem Ausgang und aus sieben parallelen Registern (SA, SB, SC, SD, SE, SF, SG), sowie einem parallelen Modulo-127-Addierer (SAd) besteht, wobei die Register und der Addierer sieben Bits haben und parallele Eingänge und Ausgänge aufweisen, wobei der Addierer zwei Eingangsgruppen $(SAd_1, SAd_2)$ besitzt, wobei die Verbindungen zwischen den Registern und dem Addierer folgendermaßen ausgestaltet sind : die Exclusiv-ODER-Gatter $SP_7$ bis $SP_4$ sind mit einem Eingang an die Anschlüsse $B_4$, $B_3$, $B_2$, $B_1$ angeschlossen und die Gatter $SP_3$ bis $SP_1$ sind an die Anschlüsse $B_8$, $B_7$, $B_6$ angeschlossen ; das erste Register SF ist mit seinen Eingängen an die Ausgänge der vorhergehenden Gatter angeschlossen ; die Ausgänge des Registers SF sind einesteils an die Eingänge des Registers SG und zum anderen Teil an die Eingänge $(SAd_2)$ einer Gruppe von Addierern angeschlossen ; das Register SG ist ausgangsseitig nach kreisförmiger Verschiebung um eine Stelle zu den hochwertigen Bits an die Eingänge der anderen Gruppe $(SAd_1)$ von Addierern angeschlossen ; die Ausgänge der Addierer sind mit den Eingängen des Registers SB verbunden, das zusammen mit den Registern SC, SD und SF in Serie geschaltet ist, wobei die Ausgänge des Registers SE zu den anderen Eingängen der Gatter $SP_7$ bis $SP_1$ zurückgeschleift sind ; die zweite Untereinheit S hat einen Ausgang 20 mit 5 Bits, die die 5 niedrigwertigen Bits des Registers SA sind ;

3) daß die dritte Untereinheit T aus 5 Exclusiv-ODER-Gattern $TP_5 ... TP_1$ mit zwei Eingängen und einem Ausgang besteht, aus 5 parallelen Registern (TA, TB, TC, TD, TE) und aus einem Modulo 31-Addierer (TAd), wobei sämtliche Register und der Addierer 5 Bits aufweisen und zwei parallele Eingänge bzw. Ausgänge haben, wobei der Addierer zwei Eingangsgruppen $TAd_1, TAd_2$ hat und wobei die Verbindungen zwischen den Registern und dem Addierer folgendermaßen ausgestaltet sind : die Exclusiv-ODER-Gatter sind mit einem Eingang an die Klemmen $B_8$, $B_7$, $B_6$, $B_5$, $B_4$ angeschlossen ; die Eingänge des ersten Registers TC sind an die Ausgänge der vorhergehenden Gatter angeschlossen, wobei die Ausgänge einesteils an die Eingänge des Registers TD und zum anderen Teil an die Eingänge $(TAd_2)$ einer Gruppe von Addierern angeschlossen sind, wobei die Ausgänge des Registers TD an die Eingänge des Registers TE angeschlossen sind, wobei die Ausgänge dieses Registers an die Eingänge $(TAd_1)$ der anderen Addierergruppe angeschlossen sind ; die Ausgänge des letztgenannten sind an die Eingänge des Registers TA angeschlossen ; die Ausgänge dieses Registers sind an die Eingänge des Registers TB angeschlossen, dessen Ausgänge über die anderen Eingänge der Gatter $T_5 ... T_1$ zurückgeschleift sind ; wobei die dritte Untereinheit T ebenfalls eine logische Schaltung $(T_{10})$ vom Exclusiv-ODER-Typ mit 5 Bits hat, mit einer ersten Eingangsgruppe (22), die an die Ausgänge des Registers TD angeschlossen ist, und mit einer zweiten Eingangsgruppe 24, die an die Ausgänge des Registers TA angeschlossen ist, wobei die logische Schaltung einen Ausgang mit 5 Bits aufweist, der den Ausgang (26) der dritten Untereinheit T darstellt,

4) daß der Generator unter anderem einen Modulo 2-Addierer (60) mit einem Eingang (61) mit 5 Bits, die an den Ausgang (53) des logischen ODER-Gatters (50) angeschlossen sind, und mit einem Ausgang (62) mit einem Bit, der an die Ausgangsklemme $c_8$ angeschlossen ist aufweist, und

5) daß die Ausgangsklemmen $c_6$ und $c_7$ ständig an ein Potential angeschlossen sind, das dem logischen Zustand 0 entspricht.

0 083 998

FIG. 1

0 083 998

FIG. 2

FIG. 3